(19) Europäisches Patentamt

European Patent Office

Office européen des brevets

(11) **EP 2 037 408 B1**

(12) **EUROPEAN PATENT SPECIFICATION**

(45) Date of publication and mention
of the grant of the patent:
**28.03.2012 Bulletin 2012/13**

(51) Int Cl.:
*G06T 7/00* (2006.01)   *G06T 7/20* (2006.01)
*G01S 11/12* (2006.01)   *G01S 3/786* (2006.01)

(21) Application number: **07116447.9**

(22) Date of filing: **14.09.2007**

(54) **Method, computer program and device for determining the risk of midair collision**

Verfahren, Computerprogramm und Vorrichtung zum Bestimmen der Gefahr einer Kollision in der Luft

Procédé, programme informatique et dispositif pour déterminer le risque d'une collision en vol

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**18.03.2009 Bulletin 2009/12**

(73) Proprietor: **SAAB AB
581 88 Linköping (SE)**

(72) Inventor: **Nordlund, Per-Johan
582 32, LINKÖPING (SE)**

(74) Representative: **Norberg, Charlotte et al
Albihns.Zacco
Valhallavägen 117
Box 5581
114 85 Stockholm (SE)**

(56) References cited:
**EP-A- 0 459 295      EP-A- 0 874 331
US-A1- 2007 210 953      US-B1- 6 327 536**

**Description**

TECHNICAL FIELD

The invention relates to a method, computer program and device to determine the probability of midair collision of vehicles. In particular, the invention relates to determine the risk of collision in unmanned vehicles.

BACKGROUND ART

A fundamental problem arising when operating unmanned aerial vehicles (UAVs) is how to avoid mid-air collisions autonomously using on-board sensors. Today, depending on the type of airspace and aircraft, manned aircraft either resort to automatic transponder-based collision avoidance systems like TCAS (commercial airliners), or the pilot's eyes for smaller aircraft using Visual Flight Rules (VFR). Operating UAVs today usually require segregated airspace keeping out from civilian air traffic. The next generation UAVs need to be able to fly autonomously in civilian air space and therefore also need an autonomous collision avoidance system that detects both transponder-based vehicles as well as other aircraft without transponders (parachuters, gliders, other UAVs, etc).

Manned aircraft flying in controlled airspace maintain a safe distance between each other using the service provided by an Air Traffic Control (ATC). ATC infonns and orders human pilots to perform manoeuvres in order to avoid Near-MidAir Collisions (NMAC). The last decade semi-automatic systems like ACAS (Airborne Collision Avoidance System) have been implemented that essentially moves this responsibility from ATC to the pilot. ICAO (International Civil Aviation Organization) stipulates that all manned aircraft with more than 19 passengers carry an ACAS system. The present implementation of ACAS (called TCAS II) gives the pilot a warning (e.g. "climb, climb") and a so called Resolution Advice (RA) when the risk of collision between two aircraft exceeds a certain threshold. The pilot then performs the recommended manoeuvre manually. A transponder based link ensures that the RA given to the pilots on both aircraft is such that the best manoeuvre is taken jointly to avoid a collision.

The ACAS/TCAS system, however, assumes that both aircraft exchanges data on speed, height and bearing over a data link and that both systems cooperate. When operating small UAVs this assumption is often no longer valid. A typical UAV operates on altitudes where small intruding aircraft are often present that do not carry transponders. This paper describes a method for detecting hazardous situations based on data from a passive bearings-only sensor.

One of the most important dichotomies is the choice of state vector propagation: Nominal, worst-case or probabilistic. The probabilistic approach provides a framework that allows combining the naturally occurring uncertainties in measurements in a stringent framework.

A challenge with bearings-only measuring sensors is how to deal with the significant uncertainty obtained in estimated relative distance. One approach to increase accuracy in the distance estimate is to perform own platform manoeuvres.

Document US, 20070210953 A1 disclose a system and method for collision sense and avoidance system and method and an aircraft. The collision sense and avoidance system includes an image interrogator identifies potential collision threats to the aircraft and provides maneuvers to avoid any identified threat. A Line Of Sight (LOS), multi-target tracking unit, tracks detected local targets and maintains a track history in LOS coordinates for each detected local target. A threat assessment unit determines whether any tracked local target poses a collision threat.

In Monte-Carlo methods the probabilities are calculated for multiple points of an uncertain area around the detected object. Monte Carlo methods are known to be able to approximate probabilities arbitrarily well. They are also known to be computer intensive particularly when the underlying probabilities are small.

The object of the invention is to provide a method to compute a probability of near midair collision between two vehicles/objects that may be performed on a vehicle in real time.

SUMMARY OF THE INVENTION

Embodiments of the present invention address the problem of providing a method for enable a computation of a near mid air collision on a vehicle in real time.

The present invention relates to a method according to the claim 1.

The invention discloses a method for determining the probability of a vehicle colliding with a detected object comprising the step of: detecting the object, by capturing an image by means of an optical sensor mounted on the vehicle and registering the object in the image, determining from a series of images captured by the optical sensor the relative position and velocity of the detected object, and thereby a position, a direction and a velocity relative to the vehicle, by a target tracking unit arranged in the vehicle, determining a stochastic process, representing a relative distance between the vehicle and the detected object, the stochastic process having a direction and a constant velocity $\dot{s}(t)=v(0)$ relative to the vehicle, wherein the stochastic process has stochastic initial values $s(0)$ and $v(0)$, wherein the stochastic process is defined by s(t)=s(0)+v(0)t in two dimensions, defining a safety zone of the vehicle in relation to the detected object by approximating a safety zone as a straight line located between the detected object and the vehicle perpendicular to a line of sight of the detected object, wherein the straight line is located at a distance R from the vehicle and has a predetermined length of 2R, wherein R is a minimum safety distance and determining the probability of colliding with the detected object over a period of time by considering the stochastic process, wherein the probability of colliding with the detected object is set to be the probability of the stochastic process, crossing the straight line, based on a random variable τ representing the time t it takes for the relative distance along the line of sight to decrease to R, wherein the position of the detected object relative to the vehicle is utilized as the initial value s(0) of the stochastic process, wherein the direction and velocity of the detected object relative to the vehicle from the target tracking unit are utilized as the direction and velocity v(0) of the stochastic process.

Furthermore, the determining of the probability may further involve a coordinate system that is rotated such that the x-axis of the coordinate system is aligned with the x-axis of coordinate system and that the straight line of the safety zone has two end points and defining a predetermined length of the line and that the straight line is perpendicular to the x-axis of the coordinate system.

In addition, the safety zone may be defined by a rectangular or an elliptic plane toward the detected object and the stochastic process is defined as a three dimensional entity and that the coordinate system further comprises a z-axis.

In an embodiment, the collision, near mid-air collision (NMAC), between the vehicle and the object may be expressed, in a two dimensional system, as

$$NMAC_{(0,T)} \Leftrightarrow \min_{0<t<T} \|s(t)\| < R \cap \|s(0)\| > R,$$

*where*
s = distance between vehicle and object,
R = half the predetermined length of the safety zone

$$\|s(t)\| = \sqrt{s_x^2(t) + s_y^2(t)},$$

and the probability of a collision, P(NMAC), is formulated as

$$P(NMAC_{(0,T)}) \approx P(\tau |v_y| < R \cap \tau < T),$$

where
τ = represents the time it takes for the distance in the x-direction to become at least R
v = velocity

In addition may the collision, near mid-air collision (NMAC), between the vehicle and the object may be expressed, in a three dimensional system, as

$$NMAC_{(0,T)} \Leftrightarrow \min_{0<t<T} \|s(t)\| < R \cap \|s(0)\| > R,$$

*where*
s = distance between vehicle and object,
R = half the predetermined length of the safety zone

$$\|s(t)\| = \sqrt{s_x^2(t) + s_y^2(t) + s_z^2(t)}$$

and the probability of a collision, P(NMAC), is formulated as

$$P(NMAC_{(0,T)}) \approx P(\tau|v_y| < R \cap \tau|v_z| < R \cap \tau < T)$$

where
$\tau$ = represents the time it takes for the distance in the x-direction to become at least R
$v$ = velocity

Furthermore, the collision, near mid-air collision (NMAC), between the vehicle and the object may also be expressed, wherein the safety zone has an elliptic plane towards the detected object, as

$$NMAC_{(0,T)} \Leftrightarrow \min_{0<t<T} \|s(t)\| < R \cap \|s(0)\| > R,$$

where
s = distance between vehicle and object,
R = the radius of the safety zone

$$\|s(t)\| = \sqrt{s_x^2(t) + s_y^2(t) + s_z^2(t)}$$

and the probability of a collision, P(NMAC), is formulated as

$$P(NMAC_{(0,T)}) \approx P(\tau\sqrt{v_y^2 + v_z^2} < R \cap \tau < T)$$

where
$\tau$ = represents the time it takes for the distance in the x-direction to become at least R
$v$ = velocity

An embodiment further discloses a computer program product that when executed on a computer unit, such as a processor, executes the method as such.

Additionally, a processor with a computer program product, as stated above, installed thereon is disclosed.

An embodiment shows an unmanned vehicle comprising an optical sensor, a target tracking unit, and a processor in accordance with the above.

BRIEF DESCRIPTION OF THE DRAWINGS

The invention, together with further objectives and advantages thereof, may best be understood by reference to the following description taken in conjunction with the accompanying drawings in which:

Figure 1 shows a diagram representing where a down crossing will occur,

Figure 2 shows a comparison between sampling-method (Monte Carlo) and two different variants of the method according to the invention,

Figure 3 shows a geometry for the limit of NMAC in two dimensions,

Figure 4 shows a diagram of a probability of colliding with a detected object comparing the result using an embodiment of the invention with the result of a Monte Carlo method,

Figure 5 shows a diagram of the probability of colliding with a detected object comparing the result using an embodiment of the invention with the result of a Monte Carlo method,

Figure 6 is a diagram showing the probability of colliding with a detected object as a function of

$$\beta = \arctan \frac{m_y}{m_x}$$

Figure 7 is a diagram showing the probability of colliding with a detected object as a function of

$$\beta = \arctan \frac{m_y}{m_x}$$

Figure 8 is a diagram showing the probability of colliding with a detected object as a function of

$$\beta = \arctan \frac{m_y}{m_x}$$

Figure 9 is a diagram showing the probability of colliding with a detected object as a function of

$$\beta = \arctan \frac{m_y}{m_x}$$

Figure 10 is a schematic geometry of the invention,

Figure 11 discloses an arrangement of a vehicle to determine the probability of colliding with a detected object,

Figure 12 shows a flowchart of a method for performing a calculation of a probability of collision, and

Figure 13 shows a flowchart of a calculation of the probability of collision between a vehicle and an object.

DETAILED DESCRIPTION OF EMBODIMENTS OF THE INVENTION

The method in this paper does not rely on accurate distance estimates. The reason is that the method is based on computed cumulative probability of NMAC. Cumulative probability here means that we consider the probability of NMAC over an arbitrary period of time. The method of cumulative probability is robust to large uncertainties, as opposed to a method based on instantaneous probability of NMAC where large uncertainties tend to diminish the resulting probability. The instantaneous probability of NMAC is computed as the probability of the relative position at a time t being within the safety zone. A cumulative probability of NMAC based on this instantaneous probability is not easily obtained because of strong dependence between NMAC at different time instants.

The invention makes use of theory for stochastic processes and level crossings. A stochastic process is a random process. The event corresponding to NMAC can be seen as a level crossing of a safety zone. By appropriate approximations of the safety zone the cumulative probability of NMAC becomes computationally tractable. The situation implies large initial uncertainties, typically as a result of tracking intruders based on angle-only sensors. In an embodiment the determination is extended to three dimensions.

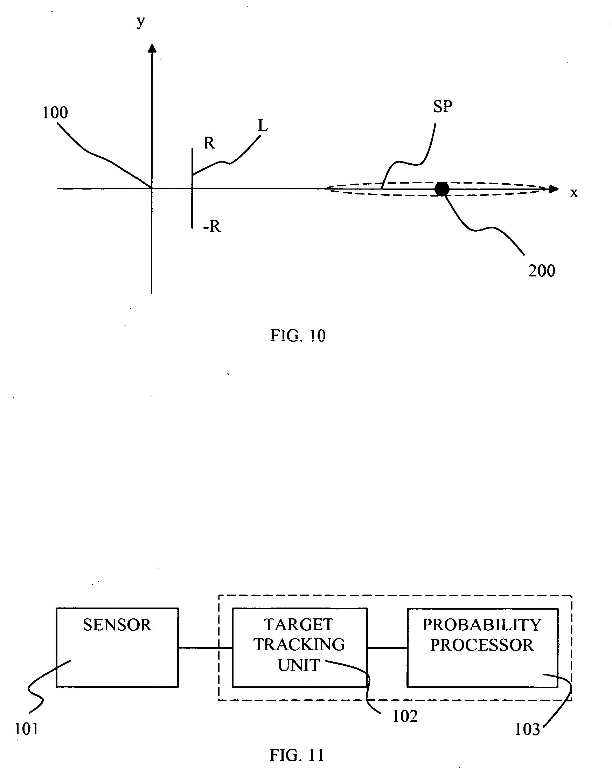

An embodiment relates to a method for determining the probability of a detected object colliding with a vehicle based on data from an optical sensor such as a camera or the like arranged on the vehicle. From an image taken by a camera or the like one can determine the angle to the object with pretty good accuracy but it is very hard to determine a distance to the object. By modelling relative distance as a stochastic process the large distance uncertainty is included in a natural way. The detected object will represent an area/volume as shown in Figure 10. The detected object is placed within a coordinate system that is rotated in a way that the object is aligned with an x-axis of the coordinate system. The determination further involves approximating a safety zone of the vehicle as a straight line of a predetermined length, 2R, having end points R,R and R, -R in the coordinate system, wherein the straight line crosses the x-axis. In the illustrated example the safety zone line is perpendicular to the x-axis. In the embodiment of extending the calculation to three dimensions the safety zone limit line is a plane perpendicular to the detected object forming, for example, a puck volume or an elliptic volume, that surrounds the vehicle. Independent of the shape one may approximate the crossing area toward the detected object as a rectangular or an elliptical area.

By taken into account the relative velocity, that gives direction, and velocity of the object, the probability of the stochastic process coming in contact with said line, with the end points (R,R) or (R,-R), is calculated in a processor arranged at the vehicle. The relative velocity and the relative position may be read from a target tracking unit, such as a kalman filter or the like, that calculates the direction and velocity of the object based on a sequence of, for example, recorded images.

The result of the calculation may then be used in order to perform an evasive action, such as to steer away from the object or to determine no evasive action is needed. Below will the theory of the calculation and embodiments be described:

**Theory for extremes and level-crossings**

Consider a stochastic process {$x(t)$, $t \in$ **R**} with (density $f_{x(t)}(x)$. We are interested in the distribution of the minimum of the process, or actually the probability that the minimum is less than a certain level, i.e.

$$P\left( \min_{0 \leq t \leq T} x(t) < u \right). \tag{1}$$

In general it is difficult to compute (1), but we can use the fact that if $x(0) > u$ then for $\min_{0 \leq t \leq T} x(t) < u$ to become true there must be at least one down-crossing of level u, i.e.

$$P\left( \min_{0 \leq t \leq T} x(t) < u \right) = P\left( (x(0) > u) \sqcap (N^{-}_{(0,T)}(x,u) \geq 1) \right) + P(x(0) < u), \tag{2}$$

where $N^{-}_{(0,T)}(x, u)$ is the number of down-crossing. Moreover, (2) can usually be approximated well by

$$P\left( \min_{0 \leq t \leq T} x(t) < u \right) \leq P(N^{-}_{(0,T)} \geq 1) + P(x(0) < u)$$
$$\leq E[N^{-}_{(0,T)}] + P(x(0) < u), \tag{3}$$

where $N^{-}_{(0,T)}$ is short for $N^{-}_{(0,T)}(x,u)$. Assume $x(t)$ have absolutely continuous sample paths, i.e.

$$x(t) = \int_{-\infty}^{t} y(s)ds, \tag{4}$$

where $y(s)$ is an integrable function. Then the expected value for the number of down-crossings $E[N^{-}_{(0,T)}]$ can be computed using Rice's formula, see Theorem 1.

**Theorem 1** (**Rice's formula extended**) *For any stochastic process {$x(t)$, $t \in$ **R**} with absolutely continuous sample paths and absolutely continuous distribution, the down-crossings intensity of a level u is given by*

$$E[N^{-}_{(0,T)}(x,u)] = \int_{0}^{T} \int_{-\infty}^{0} -z f_{x(t),\dot{x}(t)}(u,z)dz\,dt. \tag{5}$$

where $f_{x(t)\dot{x}(t)}(\cdot,\cdot)$ is the joint probability density for the process x(t) and its derivative $\dot{x}(t)$.

**Probability of collision in one dimension**

**Level-crossings in one dimension**

The probability of NMAC in one dimension, NMAC$^{l-D}$. can be formulated as an extreme value problem according to

$$P(\mathrm{NMAC}^{1-D}_{(0,T)}) = P\big(\min_{0<t<T} s(t) < R \cap s(0) > R\big). \qquad (6)$$

where $(0.T)$ is the period of time under consideration. Moreover, $s(t)$ is a stochastic process representing the relative distance between the two objects and R is the minimum safety distance. We are only interested in a potential NMAC in the future, thereby the added condition $s(0) > R$. This problem formulation is appealing in such a way that if the relative distance $s(t)$ for any $t$ falls below $R$, no matter for how long, we have a NMAC. Using the theory from **above** we have that

$$P(\mathrm{NMAC}_{(0,T)}) = P\big(s(0) > R \cap N^-_{(0,T)} \geq 1\big) \leq E[N^-_{(0,T)}]. \qquad (7)$$

where

$$E[N^-_{(0,T)}] = \int_0^T \int_{-\infty}^0 -v f_{s(t),\dot{s}(t)}(R,v) dv dt. \qquad (8)$$

The probability of NMAC is then given by Lemma 1.

Lemma 1 (Probability of down-crossing of a given level) For a stochas*tic process* $\{s(t), t \in \mathbf{R}\}$ *with* $\dot{s}(t) = v(0)$ *the probability of a down-crossing of a level R within T sec is given by*

$$P\big(s(0) > R \cap N^-_{(0,T)} \geq 1\big) = P\big(N^-_{(0,T)}(\dot{s}, R) = 1\big)$$
$$= \int_R^\infty \int_{-\infty}^{-\frac{s-R}{T}} p_{s(0),v(0)}(s,v) dv ds, \qquad (9)$$

*where* $p_{s(0), v(0)}, (s,v)$ *is the joint probability function for s(0) and v(0).* Proof: *See Example 1 and 2*

Example 1 *Exact probability of NMAC*

*Consider the one-dimensional double integrator, i.e.*

$$\dot{s} = v, \quad p_{s(0)}(s) = \mathcal{N}(m_s, \sigma_s^2),$$
$$\dot{v} = 0, \quad p_{v(0)}(v) = \mathcal{N}(m_v, \sigma_v^2), \qquad (10)$$

*assuming s(0) and* v(0) *(are uncorrelated. The following reasoning will provide us with an expression for*

$$P(\mathrm{NMAC}_{(0,T)}).$$

*Due to v(t) = v(0), for a down-crossing to occur we must* have *s(0) > R. Moreover, the constant velocity means that there can never be two or more down-crossings, i.e.*

$$P\big(s(0) > R \cap N^{-}_{(0,T)} \geq 1\big) = P\big(N^{-}_{(0,T)} = 1\big). \qquad (11)$$

*Given s(0) > R, for a down-crossing to occur within the time frame $0 \leq t \leq T$ the velocity needs to be*

$$-\infty \leq v(0) \leq -\frac{s(0) - R}{T}, \qquad (12)$$

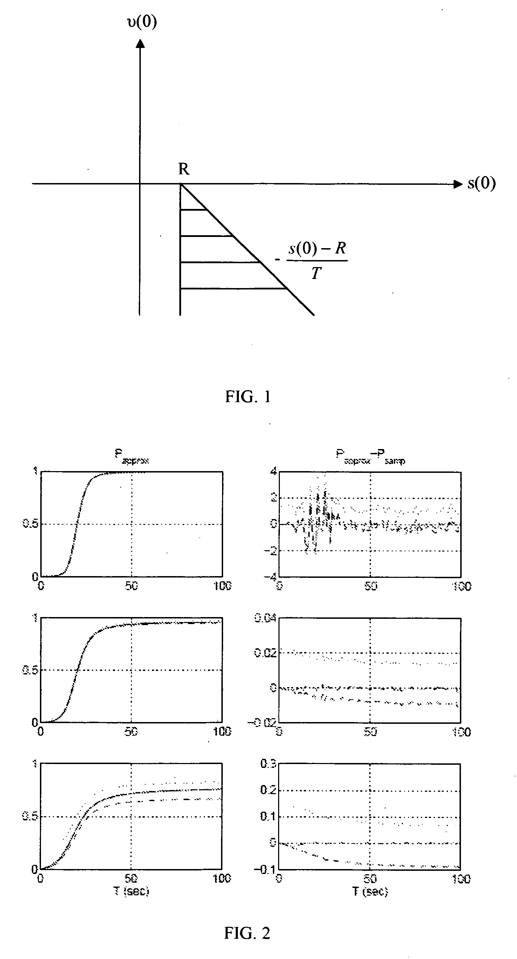

*see Figure 1. The probability for this to happen is*

$$\frac{1}{\sqrt{2\pi}\sigma_v} \int_{-\infty}^{-\frac{s(0)-R}{T}} e^{-\frac{(v - m_v)^2}{2\sigma_v^2}} \, dv = \Phi\Big(\frac{R - s(0) - m_v T}{\sigma_v T}\Big). \qquad (13)$$

*Now, taking into account that the position s(0) = s is (also stochastic we have that*

$$\begin{aligned}
P\big(N^{-}_{(0,T)} = 1\big) &= \frac{1}{2\pi\sigma_s\sigma_v} \int_{R}^{\infty} e^{-\frac{(s - m_s)^2}{2\sigma_s^2}} \Big( \int_{-\infty}^{-\frac{s-R}{T}} e^{-\frac{(v - m_v)^2}{2\sigma_v^2}} \, dv \Big) ds \\
&= \frac{1}{\sqrt{2\pi}\sigma_s} \int_{R}^{\infty} e^{-\frac{(s - m_s)^2}{2\sigma_s^2}} \Phi\Big(\frac{R - s - m_v T}{\sigma_v T}\Big) ds \qquad (14) \\
&= \frac{1}{\sigma_s} \int_{R}^{\infty} \phi\Big(\frac{s - m_s}{\sigma_s}\Big) \Phi\Big(\frac{R - s - m_v T}{\sigma_v T}\Big) ds
\end{aligned}$$

*and therefore*

$$P\big(\mathrm{NMAC}_{(0,T)}\big) = \frac{1}{\sigma_s} \int_{R}^{\infty} \phi\Big(\frac{s - m_s}{\sigma_s}\Big) \Phi\Big(\frac{R - s - m_v T}{\sigma_v T}\Big) ds. \qquad (15)$$

Figures 1: A down-crossing will occur within $(0, T)$ sec if $s(0)$ and $v(0)$ are located somewhere in the marked area.

**Example 2** *Probability of NMAC using Rice formula*

*The same result for* $P(\mathrm{NMAC}_{(0, T)})$ *as in (15) is obtained using the expression for expected value of the number of down-crossings. i.e*

$$E[N^{-}_{(0,T)}] = \int_{0}^{T} \int_{-\infty}^{0} -v p_{s(t), v(t)}(R, v) \, dv \, dt. \qquad (16)$$

*Using the change of variables*

$$\begin{bmatrix} s(t) \\ v(t) \end{bmatrix} = \begin{bmatrix} 1 & t \\ 0 & 1 \end{bmatrix} \begin{bmatrix} s(0) \\ v(0) \end{bmatrix}, \qquad (17)$$

*the joint probability for s(t) and v(t). assuming s(0) and v(0) are independent, is*

$$p_{s(t),v(t)}(s,v) = p_{s(0),v(0)}(s - vt, v) = p_{s(0)}(s - vt)p_{v(0)}(v). \qquad (18)$$

*With the assumption that s(0) and v(0) are distributed according to (10) we have*

$$p_{s(t),v(t)}(s,v) = \frac{1}{2\pi\sigma_s\sigma_v}e^{-\frac{(s-vt-m_s)^2}{2\sigma_s^2}}e^{-\frac{(v-m_v)^2}{2\sigma_v^2}}. \qquad (19)$$

*Plugging (19) into (16) we get*

$$E[N_{(0,T)}^-] = \frac{1}{2\pi\sigma_s\sigma_v}\int_0^T\int_{-\infty}^0 -ve^{-\frac{(R-vt-m_s)^2}{2\sigma_s^2}}e^{-\frac{(v-m_v)^2}{2\sigma_v^2}}\,dv\,dt. \qquad (20)$$

*With a change of variables according to*

$$\begin{bmatrix} x \\ y \end{bmatrix} = \begin{bmatrix} vt \\ v \end{bmatrix}, \qquad (21)$$

*(20) is transformed to*

$$
\begin{aligned}
E[N_{(0,T)}^-] &= \frac{1}{2\pi\sigma_s\sigma_v}\int_{-\infty}^0\int_{-\infty}^{\frac{x}{T}} e^{-\frac{(R-x-m_s)^2}{2\sigma_s^2}}e^{-\frac{(y-m_v)^2}{2\sigma_v^2}}\,dy\,dx \\
&= \frac{1}{\sigma_s}\int_R^\infty \phi(\frac{s-m_s}{\sigma_s})\Phi(\frac{R-s-m_vT}{\sigma_vT})\,ds,
\end{aligned}
\qquad (22)
$$

*which is identical to (15).*

$$P(N_{(0,T)}^- = 1) \text{ with corr}$$

In this section we use the theory from **above to cover the more important case of** correlated random variables. Assume the process s(t) and its derivate s(t) have stochastic, initial values $s(0)$ and $v(0)$ respectively, but once $s(0)$ and $v(0)$ are determined the process is exactly predictable. This means for one thing that

$$P(N_{(0,T)}^- = 1) = E[N_{(0,T)}^-]. \qquad (23)$$

**Moreover, assume $s(0)$ and $v(0)$ are two normally distributed, mutually correlated variables. then P (N⁻$_{(0,T)}$ = 1) is given by Lemma 2.**
**Lemma 2 (Probability of down-crossing with correlated variables)** *For a stochastic process $\{s(t).t \in$ **R**$\}$ with $\dot{s}(t) = v(0)$ and*

$$\begin{bmatrix} s(0) \\ v(0) \end{bmatrix} \sim \mathcal{N}\left(\begin{bmatrix} m_s \\ m_v \end{bmatrix} \cdot \begin{bmatrix} \sigma_s^2 & \rho\sigma_s\sigma_v \\ \rho\sigma_s\sigma_v & \sigma_v^2 \end{bmatrix}\right), \qquad (24)$$

*the probability of a down-crossing of a level R within T sec is given by*

$$P\left(N_{(0,T)}^{-}=1\right)=\frac{1}{2\pi(1-\gamma^2)^{\frac{1}{2}}}\int_{\frac{m_v}{\sigma_v}}^{\infty}\int_{h}^{\infty}e^{-\frac{u^2-2\gamma uv+v^2}{2(1-\gamma^2)}}\,du\,dv$$
$$-\frac{1}{2\pi(1-\rho^2)^{\frac{1}{2}}}\int_{\frac{m_v}{\sigma_v}}^{\infty}\int_{\frac{m_s-R}{\sigma_s}}^{\infty}e^{-\frac{u^2-2\rho uv+v^2}{2(1-\rho^2)}}\,du\,dv, \tag{25}$$

or

$$P\left(N_{(0,T)}^{-}=1\right)=\frac{1}{2\pi(1-\eta^2)^{\frac{1}{2}}}\int_{-\frac{m_s-R}{\sigma_s}}^{\infty}\int_{h}^{\infty}e^{-\frac{u^2-2\eta uv+v^2}{2(1-\eta^2)}}\,dv\,du, \tag{26}$$

where

$$h=\frac{m_s-R+m_vT}{\sqrt{\sigma_v^2T^2+2\sigma_s\sigma_v\rho T+\sigma_s^2}},$$
$$\gamma=\frac{\sigma_vT+\rho\sigma_s}{\sqrt{\sigma_v^2T^2+2\rho\sigma_s\sigma_vT+\sigma_s^2}}, \tag{27}$$
$$\eta=-\frac{\rho\sigma_vT+\sigma_s}{\sqrt{\sigma_v^2T^2+2\rho\sigma_s\sigma_vT+\sigma_s^2}}.$$

Proof: *See* **above**

An important special case is when $T$ - $x$ representing $P(N_{(0,x)}^- = 1)$. From (26) and (27) we see that

$$P\left(N_{(0,\infty)}^{-}=1\right)=\frac{1}{2\pi(1-\rho^2)^{\frac{1}{2}}}\int_{-\frac{m_s-R}{\sigma_s}}^{\infty}\int_{\frac{m_v}{\sigma_v}}^{\infty}e^{-\frac{u^2+2\rho uv+v^2}{2(1-\rho^2)}}\,dv\,du. \tag{28}$$

**Computing** $P\left(NMAC_{(0,T)}^{1\text{-}D}\right)$

The probability $P\left(N_{(0,T)}^{-}=1\right)$ in (25) and (26) are not possible to compute exactly. However, there exist a number of methods which provide approximate yet accurate solutions and some simple methods are elaborated on below.
The direct approach is to use a Monte-Carlo method, i.e. to draw $N$ samples from the respective distributions of the random variables and approximate the probability with the outcome of the sampling. Denote the true value of the sought probability with $p$. The set of samples is binomial distributed,

$$\{\# \text{ samples} \le x\}\sim Bin(N,p), \tag{29}$$

but for a large enough N. usually $Np(1 - p) > 20$ is adequate, the probability is approximated well by

$$\dot{\mathbf{P}}(\cdot) = \frac{\{\# \text{ samples} \leq x\}}{N} \sim \mathcal{N}(p, \sigma^2), \quad \sigma^2 = \frac{p(1-p)}{N}. \qquad (30)$$

For a relative mean square error $\epsilon \leq \frac{\sigma}{p}$ we can write needed number of samples according to

$$N \geq \frac{1-p}{\epsilon^2 p} \approx \frac{1}{\epsilon^2 p}. \qquad (31)$$

where the last approximation is valid for small $p$. Assume $p = 0.01$ and $3\epsilon \leq 0.1$. i.e a relative error smaller than 10% with probability 0.997. These values plugged into (31) suggests that we must use $N \geq 90000$. For many on-line applications this means a too high computational load.

To compute the one-dimensional normal distribution $\Phi(\cdot)$ a very accurate result is given by

$$\Phi(a) = \frac{1}{\sqrt{2\pi}} \int_{-\infty}^{a} e^{-\frac{x^2}{2}} dx \approx$$
$$\sqrt{\frac{1}{4} - \frac{7e^{-\frac{a^2}{2}} + 16e^{a^2(\sqrt{2}-2)} + (7 + \frac{\pi a^2}{4})e^{-a^2}}{120}} + \frac{1}{2}. \qquad (32)$$

for $a \geq 0$. According to [17] the relative error in (32) is less than $3 \times 10^{-4}$. which is much be Theng a sampling-based method with a tractable amount of samples.

To coutpute $\mathbf{P}\left(N_{(0,T)}^{-} = 1\right)$, which according to (25) and (26) is a two-dimensional normal distribution, we can not apply (32) directly. However, a very simple and accurate approximation to (25) exists if we know that $m_v/\sigma_v$ is large. Completing the squares for $v$ and approximating the integral with respect to v with one yields

$$\mathbf{P}\left(N_{(0,T)}^{-} = 1\right) \approx \Phi(-h) - \Phi(-\frac{m_s - R}{\sigma_s}) \qquad (33)$$

which can be computed using (32). See Figure 2 for a comparison. Similarly, an accurate approximation to (26) exists if we know that $m_s/\sigma_s$ is large. Completing the squares for $u$ and approximating the integral with respect to $u$ with one yields

$$\mathbf{P}\left(N_{(0,T)}^{-} = 1\right) \approx \Phi(-h), \qquad (34)$$

which can be computed using (32). See Figure 2 for a comparison.

A better, yet simple approximation to (26) is given by [18]. The probability from (26) with $k = -(m_s - R)/\sigma_s$ and $h$ and $\eta$ take (27) is written according to

$$\mathbf{P}\left(N_{(0,T)}^{-} = 1\right) = \mathbf{P}(u > k, v > h) = \mathbf{P}(v > h) - \mathbf{P}(u < k, v > h)$$
$$= \mathbf{P}(v > h) - \mathbf{P}(u < k)\mathbf{P}(v > h | u < k)$$
$$= \Phi(-h) - \Phi(k)\mathbf{E}\left[\Phi\left(-\frac{h - \eta u}{\sqrt{1 - \eta^2}}\right) | u < k\right]. \qquad (35)$$

The approximation consists of replacing $u$ under the expectation in (35) with its conditional expectation

$$\mu(k) = \mathrm{E}[u|u < k] = -\frac{\varphi(k)}{\Phi(k)}, \tag{36}$$

hoping that $u$ is rather constant for $u < k$. This means that (35) is approximated with

$$\mathrm{P}\left(N_{(0,T)}^- = 1\right) \approx \dot{\mathrm{P}}_{\mathrm{CW}}\left(N_{(0,T)}^- = 1\right)$$
$$= \Phi(-h) - \Phi(k)\Phi\left(\frac{\eta\mu(k) - h}{\sqrt{1 - \eta^2}}\right), \tag{37}$$

where $\Phi(\cdot)$ is computed using (32). See Figure 2 for a comparison.

**4 Extending the theory to two dimensions**

Conditions for NMAC in two dimensions

ilar to the one-dimensional case, NMAC in two dimensions, $\mathrm{NMAC}^{2\text{-}D}$, can be formulated as an extreme value problem according to

$$\mathrm{NMAC}^{2\text{-}D}_{(0,T)} \iff \min_{0 < t < T} ||s(t)|| < R \cap ||s(0)|| > R, \tag{38}$$

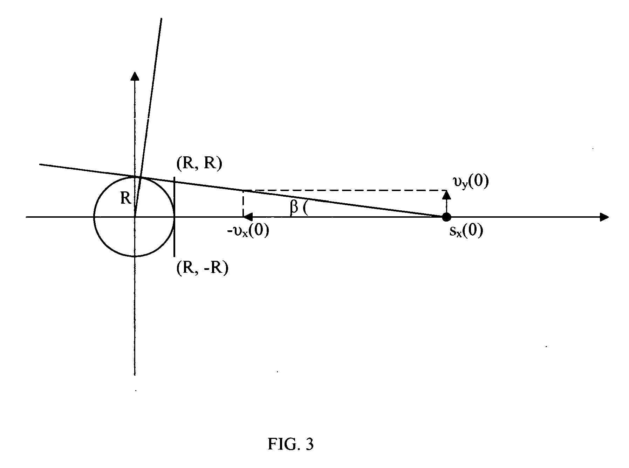

where $||s(t)|| = \sqrt{s_x^2(t) + s_y^2(t)}$. Assume that we know initial relative position $s(0)$ and velocity $v(0)$ exactly, and that the velocity is constant $v(t) = v(0)$. The coordinate system is rotated such that line of sight (LOS) is aligned with the r-axis, yielding $s_y(0) = 0$. Under the conditions above a useful geometric interpretation of (38) is has follows. For a NMAC to occur sometime in the future the initial position along LOS $s_x(0)$ and the angle $\beta$ between LOS and velocity must be such that

$$s_x(0)|\sin\beta| < R, \tag{39}$$

compare with Figure 3. Note that we must also require the position and velocity to be

$$s_x(0) > R \cap v_x(0) < 0. \tag{40}$$

The expression according to (39) is for infinite time horizons. If we consider a finite time horizon $T$ we must include

$$\frac{l}{\sqrt{v_x^2(0) + v_y^2(0)}} < T, \tag{41}$$

where the length $l$ is from $s_x(0)$ to intersection with the circle and is given by

$$l = s_x(0)\cos\beta - \sqrt{R^2 - s_x^2(0)\sin^2\beta}. \tag{42}$$

When $s(0)$ and $v(0)$ are random enables we compute the probability for NMAC according to

$$P(\mathrm{NMAC}_{(0,\infty)}) = P(s_r(0)|\sin\beta| < R \cap \Delta). \qquad (43)$$

where

$$\Delta = s_r(0) > R \cap v_r(0) < 0. \qquad (44)$$

Note that (43) is valid under the assumption that the bearing to the object is measured very accurately, i.e. we know the object is located somewhere along line of sight. A very accurate bearing together with a coordinate system rotated such that the x-axis in aligned with line of sight means that $s_y(0) \approx 0$. If $s_y(0) \approx 0$ is not a valid assumption (43) would change to

$$P(\mathrm{NMAC}_{(0,\infty)}) = P(|s_r(0)\sin\beta + s_y(0)\cos\beta| < R \cap \Delta). \qquad (45)$$

Here we assume the bearing measurements are accurate enough for the assumption to hold. The corresponding expression for a finite time horizon is

$$P(\mathrm{NMAC}_{(0,T)}) = P\left(s_r(0)|\sin\beta| < R \cap \frac{l}{\sqrt{v_x^2 + v_y^2}} < T \cap \Delta\right). \qquad (46)$$

where $l$ is given by (42).

Unfortunately, (43) and particularly (46) are difficult to compute analytically when the involved random variables are normally distributed. An approach to overcome this difficulty is to consider the crossing of a line with end points ($R$, $-R$) to ($R$, $R$) instead of intersection with the circle, see Figure 3. A go approximation for a NMAC to occur is to the relative position must cross this finite line, i.e.

$$(s_r(0) - R)|\tan\beta| < R, \qquad (47)$$

assuming $\Delta$ is true. Define a random variable $\tau$ according to

$$\tau = \begin{cases} \frac{s_r(0)-R}{-v_r(0)} & \text{if } s_r(0) > 0 \cap v_r(0) < 0 \\ \infty & \text{otherwise} \end{cases} \qquad (48)$$

where $\tau$ represents the time it takes for the distance between the two objects along line of sight to decrease to R. Now we can formulate an approximate probability of $\mathrm{NMAC}_{(\alpha T)}$ according to

$$P(\mathrm{NMAC}_{(0,T)}) \approx P(\tau|v_y| < R \cap \tau < T). \qquad (49)$$

i.e. given $\tau = t$, if $|v_y|$ is not large enough for the distance in the y-direction to become at least R after t seconds there will be a NMAC. The right hand side in (49) is given by Lemma 3.

Lemma 3 (Probability of down-crossing of a given finite line) For *a stochastic process* $\{s(t) = [s_r(t)\ s_y(t)]^T, t \in$ **R**$\}$ *with* $\dot{s}(t) = v(t)$, $s_y(0) = 0$ *and* $v_y(0)$ *independent of* $s_x(0)$ *and* $v_x(0)$ *the probability of a down-crossing within T sec. of a line with endpoints* $(R,R)$ *and* $(R,-R)$ *is given by*

$$\mathbf{P}(\tau | v_y | < R \cap \tau < T) = \mathbf{P}(|v_y| < \frac{R}{T})\mathbf{P}(\tau < T) + \int_{R/T}^{\infty} (p_{v_y}(y) + p_{v_y}(-y))\mathbf{P}(\tau < \frac{R}{y})dy, \qquad (50)$$

where $\tau$ is defined according to (48) and

$$\mathbf{P}(\tau < T) = \mathbf{P}(N_{(0,T)}^{-}(s_x, R) = 1). \qquad (51)$$

Proof: *See* **below**

Let $T - \infty$ in (50) and we obtain the corresponding expression for an infinite time horizon, i.e.

$$\mathbf{P}(\mathrm{NMAC}_{(0,\infty)}) = \int_0^{\infty} (p_{v_y}(y) + p_{v_y}(-y))\mathbf{P}(\tau < \frac{R}{y})dy. \qquad (52)$$

Figure 2: Comparison between $\mathbf{P}(N_{(0,T)}^{-} = 1)$ computed using sampling with $N = 90000$ (solid curve) and approximate expressions (31) (dashed), (32) (dotted) and (35) (dash-dotted). In all cases $m_s = 2400$, $m_v = 120$ and $\rho = 0.8$. In the upper plots $\sigma_s = 800$, $\sigma_v = 40$, in the middle $\sigma_s = 1200$, $\sigma_v = 60$, and in the lower plots $\sigma_s = 2400$, $\sigma_v = 120$.

**Computing** $\mathbf{P}(\mathrm{NMAC}_{(0,T)}^{2\text{-}D})$

From (50) and (26). assuming the involved random variables $s_r$, $v_r$ and $v_y$ are normally distributed, we have

$$\mathbf{P}(\mathrm{NMAC}_{(0,T)}) \approx$$

$$\frac{1}{\sqrt{2\pi}} \int_{\frac{R}{T}}^{\infty} \frac{\phi(\frac{y-m_y}{\sigma_y}) + \phi(\frac{y+m_y}{\sigma_y})}{\sigma_y \sqrt{1 - \eta^2(\frac{R}{y})}} \int_{-\frac{m_s}{\sigma_s}}^{\infty} \int_{h(\frac{R}{y})}^{\infty} e^{-\frac{s^2 - 2\eta s v + v^2}{2(1-\eta^2)}} dv\,ds\,dy$$

$$+ \frac{1}{\sqrt{2\pi}} \frac{\Phi(\frac{\frac{R}{T}-m_y}{\sigma_y}) - \Phi(\frac{-\frac{R}{T}-m_y}{\sigma_y})}{\sqrt{1 - \eta^2(T)}} \int_{-\frac{m_s}{\sigma_s}}^{\infty} \int_{h(T)}^{\infty} e^{-\frac{s^2 - 2\eta s v + v^2}{2(1-\eta^2)}} dv\,ds, \qquad (53)$$

with

$$h(t) = \frac{m_s - R + m_v t}{\sqrt{\sigma_v^2 t^2 + 2\sigma_s \sigma_v \rho t + \sigma_s^2}},$$

$$\eta(t) = -\frac{\rho \sigma_v t + \sigma_s}{\sqrt{\sigma_v^2 t^2 + 2\rho \sigma_s \sigma_v t + \sigma_s^2}}. \qquad (54)$$

The approximate expression for $\mathbf{P}(N_{(0,T)}^{-} = 1)$ according to (37) yields

$$P(\text{NMAC}'_{(0,T)}) \approx$$

$$\frac{1}{\sigma_y} \int_{R/T}^{\infty} \left( \phi(\frac{y - m_y}{\sigma_y}) + \phi(\frac{y + m_y}{\sigma_y}) \right) \hat{P}_{\text{CW}}(\tau < \frac{R}{y}) dy \qquad (55)$$

$$+ \left( \Phi(\frac{\frac{R}{T} - m_y}{\sigma_y}) - \Phi(\frac{-\frac{R}{T} - m_y}{\sigma_y}) \right) \hat{P}_{\text{CW}}(\tau < T),$$

The second term in (55) is straightforward to computer accurately using the approximation scheme according to (32). A simple and effective way of evaluating the integral is to apply Simpson's rule, i.e.

$$\int_{y^{(0)}}^{y^{(2M)}} f(y) dy = \frac{h}{3} \left( f(y^{(0)}) + 4\left(f(y^{(1)}) + \cdots + f(y^{(2M-1)})\right) \right.$$

$$\left. + 2\left(f(y^{(2)}) + \cdots + f(y^{(2M-2)})\right) + f(y^{(2M)}) \right) + R_M. \qquad (56)$$

where $y^{(0)} = R/T$, $y^{(2M)} = 4\sigma_y + m_y$ and

$$f(y^{(i)}) = \left( \phi(\frac{y^{(i)} - m_y}{\sigma_y}) + \phi(\frac{y^{(i)} + m_y}{\sigma_y}) \right) \hat{P}_{\text{CW}}(\tau < \frac{R}{y^{(i)}}). \qquad (57)$$

We know that by applying Simpson's rule according to (56) the rest term $R_M$ is less than

$$R_M < \frac{Mh^5}{90} |f^{(4)}(\xi)|, \quad y^{(0)} \leq \xi \leq y^{(2M)}. \qquad (58)$$

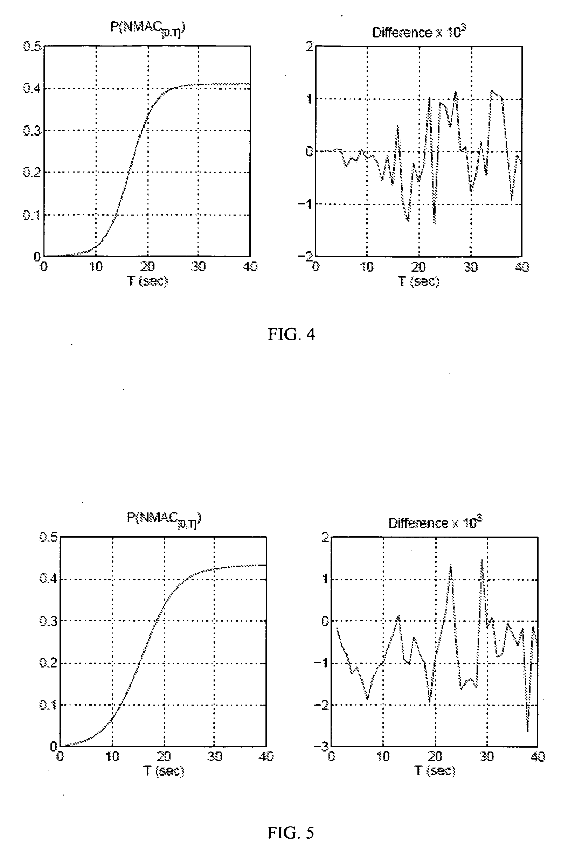

See Figures 4 and 5 for two examples using M = 50. One can conclude that the approximation is slightly underestimating as $m_s/\sigma_s$ becomes smaller. How-ewer, this should be possible to compensate for using a modified approximation compared to (37) when η is negative.

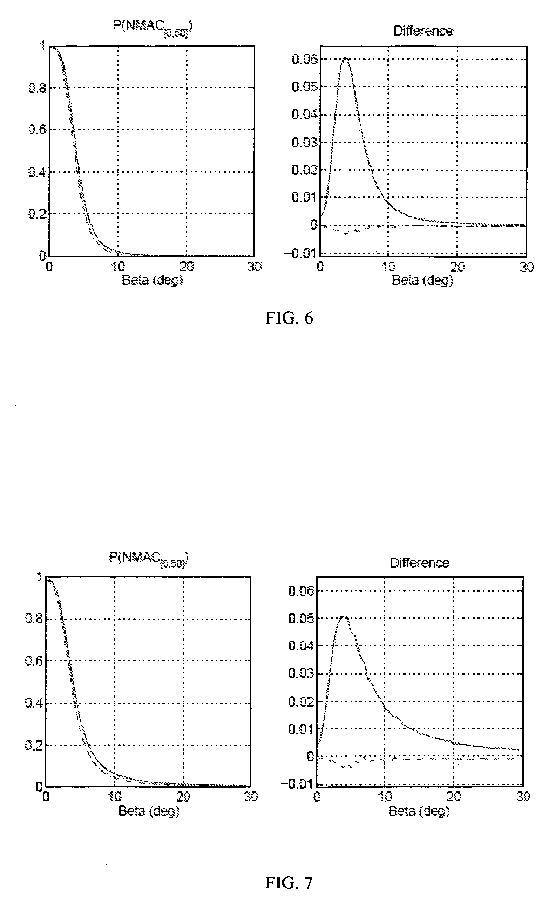

In the case we are interested in $P(\text{NMAC}_{(\alpha\infty)})$ the approximation with a line through $(R, -R)$ and $(R, R)$ becomes rather conservative. The smaller $m_s$ is the worse is the approximation, particularly when $\tan ß \approx R/(s_r(0) - R)$, compare with Figure 3. A better approximation is possible if we consider crossing of the line $(0, -R)$ and $(0, R)$ instead. Figures 6, 7 and 8 show three comparisons between the approximate solution for $P(\text{NMAC}_{[0.50]})$ using both lines respectively and the result obtained using Monte Carlo simulation with respect to the circle. The evaluation is performed as a function of $\beta = \arctan \frac{m_y}{m_x}$.

Figure 4: $\text{NMAC}_{(0,T)}$ based on (55) evaluted with Simpsons's rule and M = 50 (solid curve) compared to the Monte Carlo solution of (55) using 360000 samples (dashed curve). Here $m_s = 2400$, $m_v = 120$, $\sigma_s = 800$, $\sigma_v = 40$ $m_y = 9$, $\sigma_y = 3$ and ρ = 0.8.

Figure 5: $\text{NMAC}_{(0,T)}$ based on (55) evaluted with Simpsons's rule and M = 50 (solid curve) compared to the Monte Carlo solution of (55) using 360000 samples (dashed curve). Here $m_s = 2400$, $m_v = 120$, $\sigma_s = 1200$, $\sigma_v = 60$, $m_y = 9$, $\sigma_y = 4.5$ and ρ = 0.8.

**Dependence between $\tau$ and $v_y$**

To deal with dependence between $v_y$ and $\tau$ we proceed as follows. Starting from (4) and changing the order of computation yields

$$P(NMAC_{(0,T)}) =$$

$$\int_{R/T}^{\infty} \int_0^{R/y} p_{v_y}(y)p_{\tau|v_y}(t|y)dtdy + \int_{-R/T}^{R/T} \int_0^T p_{v_y}(y)p_{\tau|v_y}(t|y)dtdy+$$

$$\int_{-\infty}^{-R/T} \int_0^{R/y} p_{v_y}(y)p_{\tau|v_y}(t|y)dtdy = \tag{59}$$

$$\int_{R/T}^{\infty} p_{v_y}(y)P(\tau < \frac{R}{|y|}|v_y = y)dy + \int_{-R/T}^{R/T} p_{v_y}(y)P(\tau < T|v_y = y)dy+$$

$$\int_{-\infty}^{-R/T} p_{v_y}(y)P(\tau < \frac{R}{|y|}|v_y = y)dy.$$

In case of $s_x$, $v_x$ and $v_y$ are normally distributed, with mean and covariance

$$\begin{bmatrix} m_s \\ m_v \\ m_y \end{bmatrix}, \quad \begin{bmatrix} \sigma_s^2 & \rho_{sv}\sigma_s\sigma_v & \rho_{sy}\sigma_s\sigma_y \\ \rho_{sv}\sigma_s\sigma_v & \sigma_v^2 & \rho_{vy}\sigma_v\sigma_y \\ \rho_{sy}\sigma_s\sigma_y & \rho_{vy}\sigma_v\sigma_y & \sigma_y^2 \end{bmatrix}, \tag{60}$$

the distribution for $s_r$, $v_x|v_y$ is still normal with

$$m_{sv|y} = \begin{bmatrix} m_s \\ m_v \end{bmatrix} + \frac{1}{\sigma_y} \begin{bmatrix} \rho_{sy}\sigma_s\sigma_y \\ \rho_{vy}\sigma_v\sigma_y \end{bmatrix}(y - m_y),$$

$$P_{sv|y} = \begin{bmatrix} \sigma_s^2 & \rho_{sv}\sigma_s\sigma_v \\ \rho_{sv}\sigma_s\sigma_v & \sigma_v^2 \end{bmatrix} - \frac{1}{\sigma_y^2} \begin{bmatrix} \rho_{sy}\sigma_s\sigma_y \\ \rho_{vy}\sigma_v\sigma_y \end{bmatrix} \begin{bmatrix} \rho_{sy}\sigma_s\sigma_y \\ \rho_{vy}\sigma_v\sigma_y \end{bmatrix}^T. \tag{61}$$

This means that for $P(\tau < T|v_y = y)$ we use (61) instead of $m_{sv}$ and $P_{sv}$ when computing $P(\tau < T)$.

Figure 6: $P(NMAC_{(0,50)})$ as a function of $\beta = \arctan\frac{m_y}{m_v}$. Approximate solution according to (55) using line through $x = R$ and $x = 0$ are shown by a solid and dashed line respectively, and the Monte Carlo solution of (46) ($\approx 0.01$ at $\beta = 10.5$) using 360000 samples is given by a dotted line. Here $s_x = 2400$, $v_x = 120$, $\sigma_s = 600$, $\sigma_v = 30$, $\rho = 0.8$, $m_y = m_v \tan\beta$ and $\sigma_y = (m_y/m_s\sigma_s + m_s10^{-3})^{1/2}$.

**Extending the theory to three dimensions**

The next step is to include the third dimension using the theory from Section above Denote the third coordinate with $z$. As for the angle in the $y$-direction we assume that the angle along $z$ is measured accurately meaning that $s_z(0) \approx 0$.
With a protected zone shaped like a puck, the exact conditions for NMAC are

$$NMAC_{(0,\infty)} \Longleftrightarrow s_r(0)|\sin\beta| < R_y \cap l|\tan\alpha| < R_z, \tag{62}$$

where

$$\beta = \arctan \frac{v_y}{-v_x},$$
$$\alpha = \arctan \frac{v_z}{\sqrt{v_x^2 + v_y^2}}, \qquad (63)$$
$$l = s_x(0) \cos \beta - \sqrt{R_y^2 - s_z^2(0) \sin^2 \beta}.$$

Note that the expression in (62) is only valid if the two vehicles are at the same altitude.

Similar to the 2-D case we approximate the crossings geometry, but here with a rectangle perpendicular to the line-of-sight. The probability for the event $\mathrm{NMAC}_{(0,\infty)}^{3\text{-}D}$ is approximately equal to

$$P(\mathrm{NMAC}_{(0,\infty)}) \approx P\big((\tau|v_y| < R_y) \cap (\tau|v_z| < R_z)\big), \qquad (64)$$

i.e. the distance traveled during the time $\tau$ must be shorter than both $R_y$, along the $y$-axis and $R_z$ along the $z$-axis. Assume $v_y$ aud $v_z$ are independent of each other and of $s_x$ and $v_r$. The probability in (64) is then given by Lemma. 4.

Figure 7: P(NMAC$_{(0,50)}$) as a function of $\beta = \arctan \frac{m_x}{m_v}$. Approximate solution according to (55) using line through $x = R$ and $x = 0$ are shown by a solid and dashed line respectively, and the Monte Carlo solution of (46) ($\approx 0.01$ at $\beta = 20$ and $\approx 0.005$ at $\beta = 30$) using 360000 samples is given by a dotted line. Here $s_x = 2400$, $v_x = 120$, $\sigma_s = 800$, $\sigma_v = 40$. $\rho = 0.8$, $m_y = m_v \tan \beta$ and $\sigma_y = (m_y/m_s\sigma_s + m_s 10^{-3})^{1/2}$.

Lemma 4 (Probability of down-crossing of a given rectangle) *For a stochastic process $\{s(t) = [s_x(t)\ s_y(t)\ s_z(t)]^T$, $t \in \mathrm{R}\}$ with $\dot{s}(t) = v(t)$. $s_y(0) = s_z(0) = 0$. $v_y(0)$ and $v_z(0)$ independent of each other and $s_x(0)$ and $v_x(0)$ the probability of a down-crossing within $T$ sec of a rectangle with $x$-axis as its normal and side lengths $R_y$ and $R_z$ is given by*

$$P\big((\tau|v_y| < R_y) \cap (\tau|v_z| < R_z)\big) =$$
$$\int_0^\infty \big(p_{v_y}(-y) + p_{v_y}(y)\big) P\big(\tau < \frac{R_y}{y}\big) P\big(|v_z| < \frac{R_z}{R_y} y\big) dy +$$
$$\int_0^\infty \big(p_{v_z}(-z) + p_{v_z}(z)\big) P\big(\tau < \frac{R_z}{z}\big) P\big(|v_y| < \frac{R_y}{R_z} z\big) dz. \qquad (65)$$

*where $\tau$ is defined according to* (48) *and*

$$P(\tau < T) = P\big(N_{(0,T)}^-(s_x, R) = 1\big). \qquad (66)$$

Proof: See below

Assuming normally distributed random variables (65) is equal to

$$P(\text{NMAC}_{(0,\infty)}) \approx$$

$$\frac{1}{\sigma_y} \int_0^\infty \left( \phi(\frac{y+m_y}{\sigma_y}) + \phi(\frac{y-m_y}{\sigma_y}) \right) P\left(\tau < \frac{R_y}{y}\right) \left( \int_{-\frac{R_z}{R_y}y-m_z}^{\frac{R_z}{R_y}y-m_z} \frac{e^{-\frac{\varsigma^2}{2}}}{\sqrt{2\pi}} d\varsigma \right) dy +$$

$$\frac{1}{\sigma_z} \int_0^\infty \left( \phi(\frac{z+m_z}{\sigma_z}) + \phi(\frac{z-m_z}{\sigma_z}) \right) P\left(\tau < \frac{R_z}{z}\right) \left( \int_{-\frac{R_y}{R_z}z-m_y}^{\frac{R_y}{R_z}z-m_y} \frac{e^{-\frac{\varsigma^2}{2}}}{\sqrt{2\pi}} d\varsigma \right) dz.$$

$$(67)$$

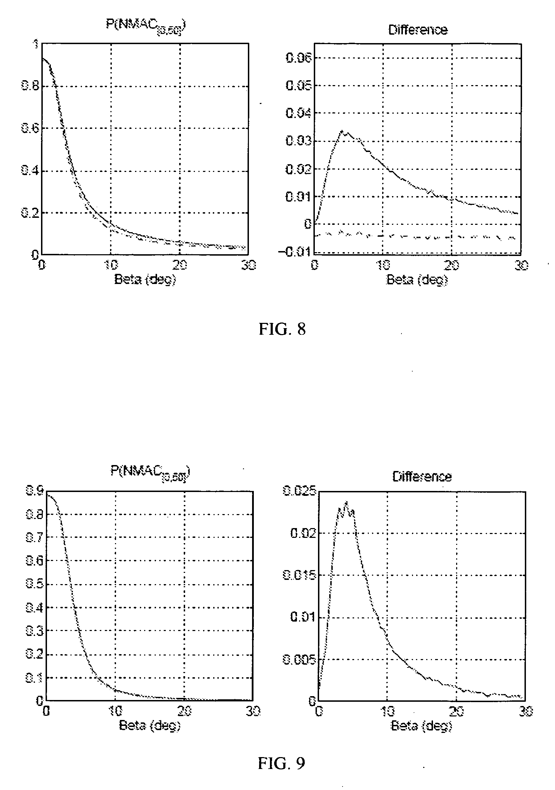

See Figure 9 for an example on the application of (67).

Figure 8: P (NMAC$_{(0.50)}$) as a function of $\beta = \arctan \frac{m_y}{m_v}$. Approximate solution according to (55) using line through $x = R$ and $x = 0$ are shown by a solid and dashed line respectively, and the Monte Carlo solution of (46) ($\approx$ 0.034 at $\beta = 30$) using 360000 samples is given by a dotted line. Here $s_x = 2400$, $v_x = 120$, $\sigma_s = 1200$, $\sigma_v = 60$, $\rho = 0.8$, $m_y = m_v \tan \beta$ and $\sigma_y = (m_y/m_s\sigma_s + m_s 10^{-3})^{1/2}$.

Figure 9: P(NMAC$_{(0,\infty)}$) as a function of $\beta = \arctan \frac{m_y}{m_v}$. Approximate solution according to (67) using $M = 100$ and a rectangle with $R_y = 2 \times 150$ and $R_z = 2 \times 75$ through $x = 75$ is shown by a solid line, and the Monte Carlo solution of (62) ($\approx 0.01$ at $\beta = 19$) using 360000 samples is given by a dotted line. Here $s_x = 2400$, $v_x = 120$, $\sigma_s = 800$, $\sigma_v = 40$, $\rho = 0.8$, $m_y = m_v \tan \beta$, $m_z = 0$. $\sigma_y = (m_y/m_s\sigma_s)^2 + (m_s10^{-3})^2)^{1/2}$ and $\sigma_y = m_s10^{-3}$.

If $y$ and are correlated is should be possible to apply a rotation which decorrelate $y$ and $z$. Any correlation between $z$ and $x$ is handled the same way as correlation bewteen $y$ and $x$ according to **the above**

## Conclusions

This report provides a method for computing the cumulative probability of near midair collision between two objects.

## Proof of Lemma 2

We know that by fixing the velocity v(0) < 0, for a down-crossing of level $R$ to occur within $T$ sec the initial distance must be

$$R < s(0) < R - v(0)T. \qquad (68)$$

The probability for a down-crossing within $T$ sec is

$$P\left(N_{(0,T)}^- = 1\right) = \int_{-\infty}^0 \left( \int_R^{R-vT} p_{s(0),v(0)}(s,v)ds \right) dv. \qquad (69)$$

As a first step rewrite the distribution in (69) using the change of variables

$$\begin{bmatrix} x \\ y \end{bmatrix} = \begin{bmatrix} \sigma_x\sqrt{1-\rho^2} & 0 \\ 0 & \sigma_v \end{bmatrix}^{-1} \begin{bmatrix} 1 & \rho\frac{\sigma_z}{\sigma_v} \\ 0 & 1 \end{bmatrix}^{-1} \begin{bmatrix} s - m_s \\ v - m_v \end{bmatrix}, \qquad (70)$$

which yields

$$P\left(N^{-}_{(0,T)} = 1\right) = \frac{1}{2\pi} \int_{\frac{m_v}{\sigma_v}}^{\infty} \int_{\frac{m_s - R + m_v T - (\rho\sigma_s + \sigma_v T)y}{\sigma_s \sqrt{1-\rho^2}}}^{\infty} e^{-\frac{x^2+y^2}{2}} \, dx\, dy$$
$$- \frac{1}{2\pi} \int_{\frac{m_v}{\sigma_v}}^{\infty} \int_{\frac{m_s - R - \rho\sigma_s y}{\sigma_s \sqrt{1-\rho^2}}}^{\infty} e^{-\frac{x^2+y^2}{2}} \, dx\, dy. \tag{71}$$

Now let

$$\begin{bmatrix} u \\ v \end{bmatrix} = \begin{bmatrix} \sqrt{1-\gamma^2} & \gamma \\ 0 & 1 \end{bmatrix} \begin{bmatrix} x \\ y \end{bmatrix}, \quad \gamma = \frac{\sigma_v T + \rho\sigma_s}{\sqrt{\sigma_v^2 T^2 + 2\rho\sigma_s\sigma_v T + \sigma_s^2}}, \tag{72}$$

for the first integral in (71) and

$$\begin{bmatrix} u \\ v \end{bmatrix} = \begin{bmatrix} \sqrt{1-\rho^2} & \rho \\ 0 & 1 \end{bmatrix} \begin{bmatrix} x \\ y \end{bmatrix}. \tag{73}$$

tor the second integral and we obtain the standard form

$$P\left(N^{-}_{(0,T)} = 1\right) = \frac{1}{2\pi(1-\gamma^2)^{\frac{1}{2}}} \int_{\frac{m_v}{\sigma_v}}^{\infty} \int_{h}^{\infty} e^{-\frac{u^2 - 2\gamma uv + v^2}{2(1-\gamma^2)}} \, du\, dv$$
$$- \frac{1}{2\pi(1-\rho^2)^{\frac{1}{2}}} \int_{\frac{m_v}{\sigma_v}}^{\infty} \int_{\frac{m_s - R}{\sigma_s}}^{\infty} e^{-\frac{u^2 - 2\rho uv + v^2}{2(1-\rho^2)}} \, du\, dv, \tag{74}$$

where

$$h = \frac{m_s - R + m_v T}{\sqrt{\sigma_v^2 T^2 + 2\sigma_s\sigma_v\rho T + \sigma_s^2}}. \tag{75}$$

If we start by fixing $s(0) > R$ instead we have

$$-\infty < v(0) < -\frac{s(0) - R}{T}. \tag{76}$$

The change of variables according to

$$\begin{bmatrix} x \\ y \end{bmatrix} = \begin{bmatrix} \sigma_s & 0 \\ 0 & \sigma_v\sqrt{1-\rho^2} \end{bmatrix}^{-1} \begin{bmatrix} 1 & 0 \\ \rho\frac{\sigma_v}{\sigma_s} & 1 \end{bmatrix}^{-1} \begin{bmatrix} s - m_s \\ v - m_v \end{bmatrix} \tag{77}$$

yields

$$P\big(N^-_{(0,T)} = 1\big) = \int_R^\infty \left( \int_{-\infty}^{-\frac{s-R}{T}} p_{s(0),v(0)}(s,v)\,dv \right) ds$$
$$= \frac{1}{2\pi} \int_{-\frac{m_s-R}{\sigma_s}}^\infty \int_{\frac{m_s-R+m_vT+(\sigma_s+\rho\sigma_vT)x}{\sigma_vT\sqrt{1-\rho^2}}}^\infty e^{-\frac{x^2+y^2}{2}}\,dydx. \tag{78}$$

Now let

$$\begin{bmatrix} u \\ v \end{bmatrix} = \begin{bmatrix} 1 & 0 \\ \eta & \sqrt{1-\eta^2} \end{bmatrix} \begin{bmatrix} x \\ y \end{bmatrix}, \quad \eta = -\frac{\rho\sigma_vT + \sigma_s}{\sqrt{\sigma_v^2T^2 + 2\rho\sigma_s\sigma_vT + \sigma_s^2}}, \tag{79}$$

which yields

$$P\big(N^-_{(0,T)} = 1\big) = \frac{1}{2\pi(1-\eta^2)^{\frac{1}{2}}} \int_{-\frac{m_s-R}{\sigma_s}}^\infty \int_h^\infty e^{-\frac{u^2-2\eta uv+v^2}{2(1-\eta^2)}}\,dvdu. \tag{80}$$

with *h* taken from (75).

**Proof of Lemma 3**

Using the density for $v_y$ and $\tau$ we have

$$P(\tau | v_y(0)| < R \cap \tau < T) = P(|v_y(0)| < \frac{R}{\tau} \cap \tau < T)$$
$$= \int_0^T \int_{-R/t}^{R/t} p_{v_y,\tau}(y,t)\,dydt. \tag{81}$$

Under the assumption thaw $\tau$ and $v_y$ are independent

$$P(\tau | v_y(0)| < R \cap \tau < T) = \int_0^T \int_{-R/t}^{R/t} p_{v_y}(y)p_\tau(t)\,dydt. \tag{82}$$

Changing the order of computation in (82) yields

$$P(\tau | v_y(0)| < R \cap \tau < T) =$$
$$\int_{R/T}^\infty \int_0^{R/y} p_{v_y}(y)p_\tau(t)\,dtdy + \int_{-R/T}^{R/T} \int_0^T p_{v_y}(y)p_\tau(t)\,dtdy +$$
$$\int_{-\infty}^{-R/T} \int_0^{-R/y} p_{v_y}(y)p_\tau(t)\,dtdy = \tag{83}$$
$$P(|v_y| < \frac{R}{T})P(\tau < T) + \int_{R/T}^\infty (p_{v_y}(y) + p_{v_y}(-y))P(\tau < \frac{R}{y})\,dy.$$

The distribution P(r < T) can either be found starting from (48) and derive the distribution for τ when seen as the ratio of two random variables. For the case with two normal variables the result is given However, $P(\tau < T)$ is exactly the same as the probability for a down-crossing to occur within $(0, T)$, i.e.

$$P(\tau < T) = P\left(N_{(0,T)}^{-}(s_r, R) = 1\right). \tag{84}$$

**Proof of Lemma 4**

From (64) we have

$$P\left(\left(\tau < \frac{R_y}{|v_y|}\right) \cap \left(\tau < \frac{R_z}{|v_z|}\right)\right) = P\left(\tau < \min\left(\frac{R_y}{|v_y|}, \frac{R_z}{|v_z|}\right)\right) =$$
$$\int_{-\infty}^{\infty} p_{v_z}(z) \int_{-\infty}^{\infty} p_{v_y}(y) \int_{0}^{\min\left(\frac{R_y}{|y|}, \frac{R_z}{|z|}\right)} p_\tau(t) dt\, dy\, dz. \tag{85}$$

Assume $R_s = R$ and $R_z = vR$, i.e. $v = R_s/R_y$ For $z > 0$ the result is

$$\int_{0}^{\infty} p_{v_z}(z) \int_{-\infty}^{\infty} p_{v_y}(y) \int_{0}^{\min\left(\frac{R_y}{|y|}, \frac{R_z}{|z|}\right)} p_\tau(t) dt\, dy\, dz =$$
$$\int_{0}^{\infty} p_{v_z}(z) \int_{-\infty}^{-\frac{z}{v}} p_{v_y}(y) P\left(\tau < \frac{R}{|y|}\right) dy\, dz +$$
$$\int_{0}^{\infty} p_{v_z}(z) \int_{-\frac{z}{v}}^{\frac{z}{v}} p_{v_y}(y) P\left(\tau < \frac{vR}{|z|}\right) dy\, dz +$$
$$\int_{0}^{\infty} p_{v_z}(z) \int_{\frac{z}{v}}^{\infty} p_{v_y}(y) P\left(\tau < \frac{R}{|y|}\right) dy\, dz. \tag{86}$$

Changing the order of integration for $y$ and $z$ in the first and third integral in (86) yields

$$\int_{0}^{\infty} p_{v_z}(z) \int_{-\infty}^{\infty} p_{v_y}(y) \int_{0}^{\min\left(\frac{R_y}{|y|}, \frac{R_z}{|z|}\right)} p_\tau(t) dt\, dy\, dz =$$
$$\int_{-\infty}^{0} p_{v_y}(y) P\left(\tau < \frac{R}{|y|}\right) \int_{0}^{-vy} p_{v_z}(z) dz\, dy +$$
$$\int_{0}^{\infty} p_{v_z}(z) P\left(\tau < \frac{vR}{|z|}\right) \int_{-\frac{z}{v}}^{\frac{z}{v}} p_{v_y}(y) dy\, dz +$$
$$\int_{0}^{\infty} p_{v_y}(y) P\left(\tau < \frac{R}{|y|}\right) \int_{0}^{vy} p_{v_z}(z) dz\, dy =$$
$$\int_{0}^{\infty} \left(p_{v_y}(-y) + p_{v_y}(y)\right) P\left(\tau < \frac{R}{y}\right) P(0 < v_z < vy) dy +$$
$$\int_{0}^{\infty} p_{v_z}(z) P\left(\tau < \frac{vR}{z}\right) P\left(|v_y| < \frac{z}{v}\right) dz. \tag{87}$$

Applying the same technique for $z < 0$ yields

$$\int_{-\infty}^{0} p_{v_z}(z) \int_{-\infty}^{\infty} p_{v_y}(y) \int_{0}^{\min(\frac{R_y}{|y|}, \frac{R_z}{|z|})} p_\tau(t)dtdydz =$$
$$\int_{0}^{\infty} (p_{v_y}(-y) + p_{v_y}(y)) \mathrm{P}\left(\tau < \frac{R}{y}\right) \mathrm{P}\left(-\nu y < v_z < 0\right)dy+ \qquad (88)$$
$$\int_{0}^{\infty} p_{v_z}(-z) \mathrm{P}\left(\tau < \frac{\nu R}{z}\right) \mathrm{P}\left(|v_y| < \frac{z}{\nu}\right)dz.$$

which together with (87) yields

$$\mathrm{P}(\mathrm{NMAC}_{(0,\infty)}) \approx \mathrm{P}\left((\tau|v_y| < R_y) \cap (\tau|v_z| < R_z)\right) =$$
$$\int_{0}^{\infty} (p_{v_y}(-y) + p_{v_y}(y)) \mathrm{P}\left(\tau < \frac{R}{y}\right) \mathrm{P}\left(|v_z| < \nu y\right)dy+ \qquad (89)$$
$$\int_{0}^{\infty} (p_{v_z}(-z) + p_{v_z}(z)) \mathrm{P}\left(\tau < \frac{\nu R}{z}\right) \mathrm{P}\left(|v_y| < \frac{z}{\nu}\right)dz.$$

In figure 10 a schematic overview of an embodiment of a method for calculating a probability that a detected object 200 is going to collide with a vehicle 100, such as a UAV or the like is shown in an x-y coordinate system based on an angle accurate sensor, such as a camera. The coordinate system is rotated so that the x-axis is aligned with a line of sight to the detected object 200. The detected object 200 is approximated in distance as a stochastic process defining an elongated area/volume SP and a line L defines an approximated safety zone of the vehicle with a length of 2R in the y-direction of the coordinate system. The probability of the object 200 to collide with the vehicle 100, that is, when the stochastic process SP is calculated to come in contact with the line L, wherein the line L is defined between the end points (R,R) or (R, -R), is calculated by a method in the unmanned vehicle.

Figure 11 discloses a schematic overview of units in an unmanned vehicle. The vehicle comprises an optical recording sensor 101, such as a digital camera or the like. The optical sensor 101 records an image of a detected object. Detection may be done by image processing and certain predetermined limits of values, such as colour differentiation between background and image part, predetermined shapes or the like. An angle to the detected object is rather accurate in the taken image but the distance to the object is more uncertain. The vehicle further comprises a target tracking unit 102, such as a processor performing a target tracking filter or the like, which is used to determine the direction of the detected object relative the vehicle. This data may be taken from a series of images taken by the optical sensor. From the image data and the direction/velocity from the target tracking unit 102 a probability processor 103 in the vehicle is arranged to calculate the probability of the detected object to collide with the vehicle. The unmanned vehicle may perform evasive actions based on the calculated probability, such as to turn away from the object or the like. An embodied UAV equipped with an installed inventive method may comprise a camera arranged to record images to detect an object and the direction and velocity of the object, a processor arranged to determine the direction and velocity as well as performing the calculation of probability of collision between the object and the UAV, and a control system in order to control the UAV. Hence, as shown in figure 11 as a dashed line, the processes of determining the relative direction and velocity of the object and the calculation of probability may be performed by the same processor.

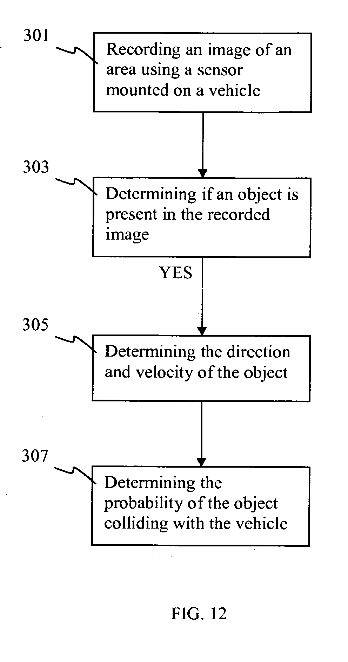

Figure 12 discloses a process for detecting an object and determining a probability of collision between a vehicle, such as a UAV, and the object.

In step 301, an image recording device, such as a camera or the like, records an image of an area. The vehicle may comprise a number of cameras directed in different directions in order to record as much of the surroundings of the vehicle. The vehicle may also/alternatively comprise merely one moveable camera to record the surrounding area.

In step 303, an image processing is preformed on the recorded image in order to determine the presence of an object. The detection of an object may be based on differentiation in colours, greyscales, forms or the like. It should be noted that during the process the recording device may continuously record images. The image processing is performed by a processor arranged in the vehicle.

If an object is present in the image the process continues to step 305. If no object is present in the image the process stops.

In step 305, a direction and velocity of the object relative the vehicle, also called relative velocity, is determined/ read from a target tracking process, such as a kalman filter process or the like, wherein a direction and velocity of an object is calculated from a sequence of recorded data, such as images or the like. In the event of using same image as the one in step 303, the kalman filter would need at least two sequential images from the recording device in order to perform the kalman filtering process. The target tracking process is performed by a processor arranged in the vehicle. The target tracking unit may as well produce a relative position of the detected object to be used in the step of calculating the probability of collision.

In step 307, a probability of a collision between the vehicle and the object is calculated by a processor arranged in the vehicle. The process of calculating the probability is described in more detail above/below.

The process steps may be performed in separated processors or a single processor.

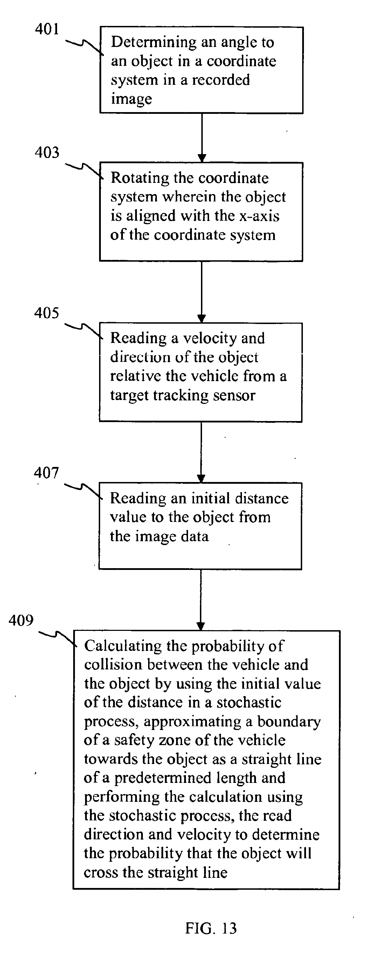

In figure 13 a schematic flowchart of an embodiment of a method for calculating a probability of collision to occur between a vehicle and a detected object in an image recorded by a camera arranged at the vehicle is shown.

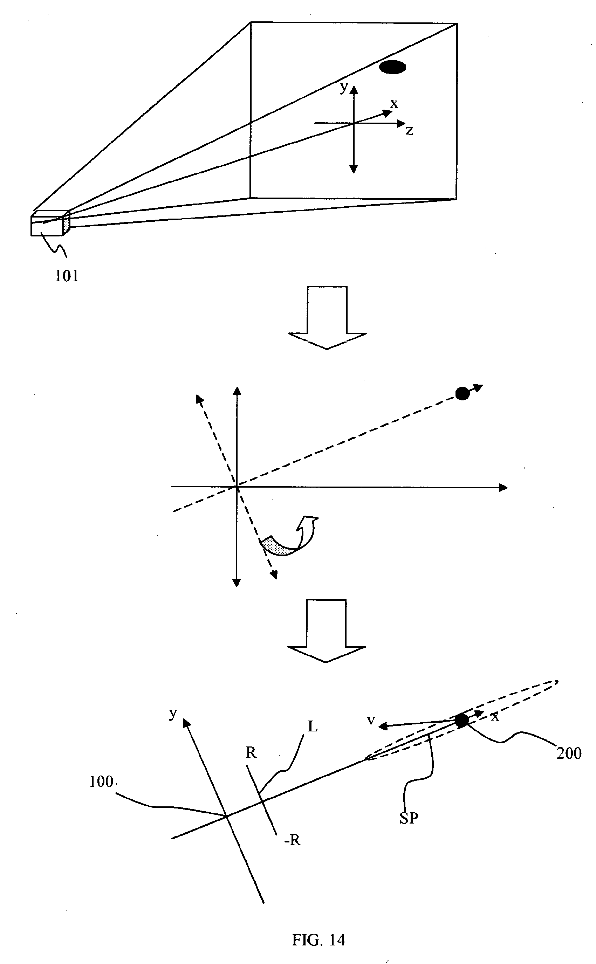

In step 401, the image is processed in an image processing step whereas an angle to the object in the image is determined considering the camera as an origin of coordinates in a coordinate system and the x-axis of the coordinate system is pointing into the image, described in figure 14.

In step 403, the coordinate system is rotated the determined angle around its point of origin to align a direction to the detected object with the x-axis of the coordinate system. It should here be noted that in the three dimensional case the coordinate system is rotated/turned so that the direction to the object in the image is aligned with the x-axis, with no readings on the y-axis or the z-axis of the coordinate system.

In step 405, data from a target tracking unit/process is read. In the target tracking process, such as a kalman filter process or the like, data from sequential images or data intake are processed in order to determine a relative position and velocity, that is, a position, a direction and a velocity of movement of the detected object relative the vehicle in the image. The direction and the velocity of movement are then read by the probability process. This step may be performed before step 403.

In step 407, an initial distance value is determined from the image, for example, the relative position from the tracking unit.

In step 408, a probability of colliding with the object is calculated. In the calculation the initial distance value is used in a stochastic process representing the uncertainty of the distance to the object. The probability calculation is performed by determining the probability of the stochastic process crossing a line of a predetermined length representing a boundary of a safety zone surrounding the vehicle taken the velocity and the direction relative the vehicle into account. It should be understood that in the case of three dimensional calculations the safety zone boundary may be represented by a rectangular/elliptic plane with a predetermined length and depth (y-length and z-length). The dimensions of the safety zone may be set to cover all possible sizes of the object with a large margin as the size of the object is not known or may be based on the dimensions of the vehicle. The elliptic plane facilitates the calculations as the calculations may not be as angle sensitive.

Figure 14 shows a schematic overview of the process step in figure 13 for setting up the object in a coordinate system.

In the top figure a camera 101 or the like records an image 501 of an area containing an object 200. As illustrated is the figure a coordinate system is arranged in the image 501.

However, due to the fact that the angle to the detected object 200 is rather accurate the coordinate system is rotated a number of degrees according to the angle aligning the object 200 with the x-axis of the coordinate system as illustrated in the middle figure of figure 14 wherein the rotated coordinate system is the dashed line coordinate system. This in its turn facilitates the calculation of the probability of collision.

When performing the calculation of the probability of collision the uncertainty of the object 200 in y direction is very small and is rather large in the x-direction (as well as z-direction in the three dimensional case) in the rotated coordinate system. The result is disclosed in the lower figure of figure 14 displaying the figure 10 rotated, wherein the boundary to the safety zone is denoted as L with a length of 2R, the distance uncertainty is defined as the stochastic process SP, and the relative velocity/direction of the object is denoted as v. This results in that the calculation is facilitated. The direction and velocity may be set up before or after the rotation of the coordinate system.

By using the method for calculating the probability of colliding as stated above, a method is provided that is not as computer intensive as known methods and therefore enables small, cost efficient UAVs to be constructed. The method also provides a possibility of setting up a probability per design and not, as known systems, performing an iterative process, performing flight tests, making manual adjustments and so on. The inventive process is much less computer intensive as it inter alia omits the discretion process of the Monte Carlo process.

It should be noted, that even if the described examples are directed toward a vehicle comprising an image recorder and a target tracking unit, the direction and the positioning data may be transferred to the vehicle over air or the like. That is, the vehicle may receive all data from a central station, for example, a radar station.

The foregoing has described the principles, preferred embodiments and modes of operation of the present invention. However, the invention should be regarded as illustrative rather than restrictive, and not as being limited to the particular embodiments discussed above. It should therefore be appreciated that variations may be made in those embodiments by those skilled in the art without departing from the scope of the present invention as defined by the following claims.

**Claims**

1.  A method for determining the probability of a vehicle (100) colliding with an object (200) comprising the step of:

    - detecting the object, by capturing an image by means of an optical sensor (101) mounted on the vehicle (100) and registering the object (200) in the image,
    - determining from a series of images captured by the optical sensor (101) the relative position and velocity of the detected object (200), and thereby a position, a direction and a velocity relative to the vehicle, (100) by a target tracking unit (102) arranged in the vehicle (100),

    **characterized by** the further steps of:

    - determining a stochastic process (SP, s(t)), representing a relative distance between the vehicle (100) and the detected object (200), the stochastic process (SP, s(t)) having a direction and a constant velocity $\dot{s}$ (t)=v(0) relative to the vehicle (100), wherein the stochastic process (SP, s(t)) has stochastic initial values s(0) and v (0), wherein the stochastic process is defined by s(t)=s(0)+v(0)t in two dimensions,
    - defining a safety zone of the vehicle in relation to the detected object by approximating a safety zone as a straight line (L) located between the detected object (200) and the vehicle (100) perpendicular to a line of sight of the detected object (200), wherein the straight line (L) is located at a distance R from the vehicle (100) and has a predetermined length of 2R, wherein R is a minimum safety distance and
    - determining the probability of colliding with the detected object (200) over a period of time by considering the stochastic process (SP, s(t)), wherein the probability of colliding with the detected object is set to be the probability of the stochastic process (SP, s(t)), crossing the straight line (L), based on a random variable $\tau$ representing the time t it takes for the relative distance along the line of sight to decrease to R, wherein the position of the detected object (200) relative to the vehicle (100) is utilized as the initial value s(0) of the stochastic process (SP, s(t)), wherein the direction and velocity of the detected object (200) relative to the vehicle (100) from the target tracking unit (102) are utilized as the direction and velocity v(0) of the stochastic process (SP, s(t)).

2.  A method according to claim 1, wherein the determining of the probability further involves a coordinate system that is rotated such that the x-axis of the coordinate system is aligned with the x-axis of coordinate system and that the straight line of the safety zone has two end points (R,R) and (R,-R) defining a predetermined length of the line and that the straight line is perpendicular to the x-axis of the coordinate system.

3.  A method according to any of the claims 1-2, wherein the safety zone is defined by a rectangular or an elliptic plane toward the detected object and the stochastic process is defined as a three dimensional entity and that the coordinate system further comprises a z-axis.

4.  A method according to any of claims 1-2, wherein the collision, relating to a near mid-air collision (NMAC), between the vehicle and the object is expressed as

$$NMAC_{(0,T)} \Leftrightarrow \min_{0<t<T} \|s(t)\| < R \cap \|s(0)\| > R,$$

*where*
s = distance between vehicle and object,
R = half the predetermined length of the safety zone

$$\|s(t)\| = \sqrt{s_x^2(t) + s_y^2(t)},$$

and the probability of a collision, P(NMAC), is formulated as

$$P(NMAC_{(0,T)}) \approx P(\tau | v_y | < R \cap \tau < T),$$

where
$\tau$ = represents the time it takes for the distance in the x-direction to become at least R
$v$ = velocity

5. A method according to claim 3, wherein the collision, relating to a near mid-air collision (NMAC), between the vehicle and the object is expressed as

$$NMAC_{(0,T)} \Leftrightarrow \min_{0 < t < T} \| s(t) \| < R \cap \| s(0) \| > R,$$

*where*
s = distance between vehicle and object,
R = half the predetermined length of the safety zone

$$\| s(t) \| = \sqrt{s_x^2(t) + s_y^2(t) + s_z^2(t)}$$

and the probability of a collision, P(NMAC), is formulated as

$$P(NMAC_{(0,T)}) \approx P(\tau | v_y | < R \cap \tau | v_z | < R \cap \tau < T)$$

where
$\tau$ = represents the time it takes for the distance in the x-direction to become at least R
$v$ = velocity

6. A method according to claim 3, wherein the collision, relating to a near mid-air collision (NMAC), between the vehicle and the object is expressed as

$$NMAC_{(0,T)} \Leftrightarrow \min_{0 < t < T} \| s(t) \| < R \cap \| s(0) \| > R,$$

*where*
s = distance between vehicle and object, R = the radius of the safety zone

$$\| s(t) \| = \sqrt{s_x^2(t) + s_y^2(t) + s_z^2(t)}$$

and the probability of a collision, P(NMAC), is fonnulated as

$$P(NMAC_{(0,T)}) \approx P(\tau \sqrt{v_y^2 + v_z^2} < R \cap \tau < T)$$

where
τ = represents the time it takes for the distance in the x-direction to become at least R
ν = velocity

**7.** A computer program product that when executed on a computer unit, such as a processor, executes the method according to any of claims 1-6.

**8.** A processor with a computer program product according to claim 7 installed thereon.

**9.** An unmanned vehicle comprising an optical sensor, a target tracking unit, and a processor according to claim 8.

**Patentansprüche**

**1.** Verfahren zum Bestimmen der Wahrscheinlichkeit, dass ein Vehikel (100) mit einem Objekt (200) kollidiert, umfassend den Schritt:

- Detektieren des Objektes durch Aufnehmen eines Bildes mittels einem optischen Sensor (101), der am Vehikel (100) montiert ist, und Registrieren des Objekts (200) im Bild,
- Bestimmen, aus einer Reihe von durch den optischen Sensor (101) aufgenommenen Bilder, der Relativposition und Geschwindigkeit des detektierten Objekts (200), und **dadurch** einer Position, einer Richtung und einer Geschwindigkeit relativ zum Vehikel (100), durch eine im Vehikel (100) angeordnete Zielverfolgungseinheit (102),

**gekennzeichnet durch** die weiteren Schritte:

- Bestimmen eines stochastischen Prozesses (SP, s(t)), der eine Relativdistanz zwischen dem Vehikel (100) und dem detektierten Objekt (200) repräsentiert, wobei der stochastische Prozess (SP, s(t)) eine Richtung und ein konstante Geschwindigkeit $\dot{s}(t)=v(0)$ relativ zum Vehikel (100) aufweist, wobei der stochastischen Prozess (SP, s(t)) stochastische Anfangswerte s(0) und v(0) aufweist, wobei der stochastische Prozess **durch** s(t)=s(0)+v(0)t in zwei Dimensionen definiert ist,
- Definieren einer Sicherheitszone des Vehikels in Beziehung auf das detektierte Objekt **durch** Approximieren einer Sicherheitszone als einer geraden Linie (L), die zwischen dem detektierten Objekt (200) und dem Vehikel (100) rechtwinklig zu einer Sichtlinie des detektierten Objekts (200) lokalisiert ist, wobei die gerade Linie (L) bei einer Distanz R ab dem Vehikel (100) lokalisiert ist und eine vorbestimmte Länge von 2R aufweist, wobei R eine minimale Sicherheitsdistanz ist, und
- Bestimmen der Wahrscheinlichkeit der Kollision mit dem detektierten Objekt (200) über einen Zeitraum, unter Erwägung des stochastischen Prozesses (SP, s(t)), wobei die Wahrscheinlichkeit der Kollision mit dem detektierten Objekt eingestellt ist als die Wahrscheinlichkeit des stochastischen Prozesses (SP, s(t)), die gerade Linie (L) zu überqueren, basierend auf einer Zufallsvariable τ, welche die Zeit t repräsentiert, die es erfordert, dass die Relativdistanz längs der Sichtlinie auf R sinkt, wodurch die Position des detektierten Objekts (200) relativ zum Vehikel (100) als der Anfangswert s(0) des stochastischen Prozesses (SP, s(t)) eingesetzt wird, wobei die Richtung und Geschwindigkeit des detektierten Objekts (200) relativ zum Vehikel (100) aus der Zielverfolgungseinheit (102) als die Richtung und Geschwindigkeit v(0) des stochastischen Prozesses (SP, s(t)) eingesetzt werden.

**2.** Verfahren gemäß Anspruch 1, wobei die Bestimmung der Wahrscheinlichkeit weiter ein Koordinatensystem involviert, das so rotiert wird, dass die x-Achse des Koordinatensystems zur x-Achse des Koordinatensystems ausgerichtet ist, und dass die gerade Linie der Sicherheitszone zwei Endpunkte (R,R) und (R,-R) hat, die eine vorbestimmte Länge der Linie definieren, und dass die gerade Linie rechtwinkelig zur X-Achse des Koordinatensystems ist.

**3.** Verfahren gemäß einem der Ansprüche 1 bis 2, wobei die Sicherheitszone durch eine rechtwinklige oder eine elliptische Ebene zum detektierten Objekt hin definiert ist und der stochastische Prozess als eine dreidimensionale Entität definiert ist, und dass das Koordinatensystem weiter eine z-Achse umfasst.

**4.** Verfahren gemäß einem der Ansprüche 1 bis 2, wobei die Kollision, die sich auf eine nahe Luftkollision (mid-air collision, NMAC) bezieht, zwischen dem Vehikel und dem Objekt ausgedrückt wird als

$$\text{NMAC}_{(0,\text{T})} \Leftrightarrow \min_{0<t<T}\|s(t)\| < R \cap \|s(0)\| > R \ ,$$

wobei
s = Distanz zwischen Vehikel und Objekt,
R = die halbe vorbestimmte Länge der Sicherheitszone

$$\|s(t)\| = \sqrt{s_x^2(t) + s_y^2(t)} \ ,$$

und die Wahrscheinlichkeit einer Kollision, P(NMAC), formuliert ist als

$$\text{P}(\text{NMAC}_{(0,\text{T})}) \approx \text{P}(\tau\,|\,\nu_y\,|<R\cap\tau<T) \ ,$$

wobei
$\tau$ = repräsentiert die Zeit, die erforderlich ist, dass die Distanz in x-Richtung zumindest R wird,
$\nu$ = Geschwindigkeit.

**5.** Verfahren gemäß Anspruch 3, wobei die Kollision, die sich auf eine Nah-Luftkollision (NMAC) bezieht, zwischen dem Vehikel und dem Objekt ausgedrückt wird als

$$\text{NMAC}_{(0,\text{T})} \Leftrightarrow \min_{0<t<T}\|s(t)\| < R \cap \|s(0)\| > R \ ,$$

wobei
s = Distanz zwischen Vehikel und Objekt,
R = die halbe vorbestimmte Länge der Sicherheitszone

$$\|s(t)\| = \sqrt{s_x^2(t) + s_y^2(t) + s_z^2(t)} \ ,$$

und die Wahrscheinlichkeit einer Kollision, P(NMAC), formuliert ist als

$$\text{P}(\text{NMAC}_{(0,\text{T})}) \approx \text{P}(\tau\,|\,\nu_y\,|<R\cap\tau\,|\,\nu_z\,|<R\cap\tau<T) \ ,$$

wobei
$\tau$ = repräsentiert die Zeit, die erforderlich ist, dass die Distanz in x-Richtung zumindest R wird,
$\nu$ = Geschwindigkeit.

**6.** Verfahren gemäß Anspruch 3, wobei die sich auf eine Nah-Luftkollision (NMAC) beziehende Kollision zwischen dem Vehikel und dem Objekt ausgedrückt wird als

$$\text{NMAC}_{(0,\text{T})} \Leftrightarrow \min_{0<t<T}\|s(t)\| < R \cap \|s(0)\| > R \ ,$$

wobei

s = Distanz zwischen Vehikel und Objekt,

R = die halbe vorbestimmte Länge der Sicherheitszone

$$\|s(t)\| = \sqrt{S_x^2(t) + S_y^2(t) + S_z^2(t)} \, ,$$

und die Wahrscheinlichkeit einer Kollision, P(NMAC), formuliert ist als

$$P(\text{NMAC}_{(0,T)}) \approx P(\tau \sqrt{v_y^2(t) + v_z^2(t)} < R \cap \tau < T) \, ,$$

wobei

$\tau$ = repräsentiert die Zeit, die erforderlich ist, dass die Distanz in x-Richtung zumindest R wird,

$v$ = Geschwindigkeit.

7. Computerprogrammprodukt, das bei Ausführung auf einer Computereinheit, wie etwa einem Prozessor, das Verfahren gemäß einem der Ansprüche 1 bis 6 ausführt.

8. Prozessor mit einem Computerprogrammprodukt gemäß Anspruch 7, das darauf installiert ist.

9. Unbemanntes Vehikel, das einen optischen Sensor, eine Zielverfolgungseinheit und einen Prozessor gemäß Anspruch 8 umfasst.

**Revendications**

1. Procédé de détermination de la probabilité de choc d'un véhicule (100) avec un objet (200), qui comprend l'étape qui consiste à :

- détecter l'objet, en capturant une image à l'aide d'un capteur optique (101) monté sur le véhicule (100), et en enregistrant l'objet (200) sur l'image,
- déterminer, à partir d'une série d'images capturées par le capteur optique (101), la position et la vitesse relatives de l'objet détecté (200), et, ainsi, une position, une direction et une vitesse par rapport au véhicule (100), à l'aide d'une unité de suivi de cible (102) placée dans le véhicule (100),

**caractérisé par** les étapes supplémentaires qui consistent à :

- déterminer un processus stochastique (SP, s(t)), qui représente une distance relative entre le véhicule (100) et l'objet détecté (200), le processus stochastique (SP, s(t)) ayant une direction et une vitesse constante $\dot{s}(t)$ **=v(0)** par rapport au véhicule (100), dans lequel ledit processus stochastique (SP, s(t)) présente des valeurs stochastiques initiales s(0) et v(0), dans lequel le processus stochastique est identifié par s(t)=s(0)+v(0)t dans deux dimensions,
- définir une zone de sécurité du véhicule par rapport à l'objet détecté en s'approchant d'une zone de sécurité sous la forme d'une ligne droite (L) située entre l'objet détecté (200) et le véhicule (100), perpendiculaire à une ligne de visée de l'objet détecté (200), la ligne droite (L) étant située à une distance R du véhicule (100) et ayant une longueur prédéterminée 2R, ou R est une distance de sécurité minimum, et
- déterminer la probabilité de choc avec l'objet détecté (200) sur une période de temps en considérant le processus stochastique (SP, s(t)), dans lequel la probabilité de choc avec l'objet détecté est définie comme étant la probabilité que le processus stochastique (SP, s(t)) croise la ligne droite (L), sur la base d'une variable aléatoire $\tau$ qui représente la durée t nécessaire à la distance relative le long de la ligne de visée pour atteindre R, où la position de l'objet détecté (200) par rapport au véhicule (100) est utilisée comme valeur initiale s(0) du processus stochastique (SP, s(t)), où la direction et la vitesse de l'objet détecté (200) par rapport au véhicule (100) fournies par l'unité de suivi de cible (102) sont utilisées comme direction et comme vitesse v(0) du processus stochastique (SP, s(t)).

2. Procédé selon la revendication 1, dans lequel la détermination de la probabilité implique en outre un système de coordonnées qui est tourné afin que l'axe x du système de coordonnées soit aligné avec l'axe x du système de coordonnées, que la ligne droite de la zone de sécurité possède deux points d'extrémité (R,R) et (R,-R), définissant une longueur prédéterminée de la ligne, et que la ligne droite soit perpendiculaire à l'axe x du système de coordonnées.

3. Procédé selon l'une quelconque des revendications 1 et 2, dans lequel la zone de sécurité est définie par un plan rectangulaire ou elliptique vers l'objet détecté, le processus stochastique est défini comme une entité en trois dimensions, et le système de coordonnées comprend en outre un axe z.

4. Procédé selon l'une quelconque des revendications 1 et 2, dans lequel le choc, lié à une quasi collision (NMAC) , entre le véhicule et l'objet est exprimé par

$$NMAC_{(0,T)} \Leftrightarrow \min_{0 < t < T} \|s(t)\| < R \cap \|s(0)\| > R,$$

où
s = distance entre le véhicule et l'objet,
R = moitié de la longueur prédéterminée de la zone de sécurité

$$\|s(t)\| = \sqrt{s_x^2(t) + s_y^2(t)},$$

et la probabilité d'une collision, P(NMAC), est formulée comme suit :

$$P(NMAC_{(0,T)}) \approx P(\tau |v_y| < R \cap \tau < T),$$

où
$\tau$ représente la durée nécessaire à la distance dans la direction x pour devenir au moins égale à R
$v$ = vitesse

5. Procédé selon la revendication 3, dans lequel le choc, lié à une quasi collision (NMAC), entre le véhicule et l'objet est exprimé par

$$NMAC_{(0,T)} \Leftrightarrow \min_{0 < t < T} \|s(t)\| < R \cap \|s(0)\| > R,$$

où
s = distance entre le véhicule et l'objet,
R = moitié de la longueur prédéterminée de la zone de sécurité

$$\|s(t)\| = \sqrt{s_x^2(t) + s_y^2(t) + s_z^2(t)}$$

et la probabilité de collision, P(NMAC), est formulée comme suit :

$$P(NMAC_{(0,T)}) \approx P(\tau|v_y| < R \cap \tau|v_z| < R \cap \tau < T)$$

où

$\tau$ représente la durée nécessaire à la distance dans la direction x pour devenir au moins égale à R

$v$ = vitesse

6. Procédé selon la revendication 3, dans lequel le choc, lié à une quasi collision (NMAC), entre le véhicule et l'objet est exprimé par

$$NMAC_{(0,T)} \Leftrightarrow \min_{0<t<T} \|s(t)\| < R \cap \|s(0)\| > R,$$

où

s = distance entre le véhicule et l'objet,

R = rayon de la zone de sécurité

$$\|s(t)\| = \sqrt{s_x^2(t) + s_y^2(t) + s_z^2(t)}$$

et la probabilité de choc, P(NMAC), est formulée comme suit :

$$P(NMAC_{(0,T)}) \approx P(\tau\sqrt{v_y^2 + v_x^2} < R \cap \tau < T)$$

où

$\tau$ représente la durée nécessaire à la distance dans la direction x pour devenir au moins égale à R

$v$ = vitesse

7. Programme informatique qui, lorsqu'il est exécute sur une unité informatique, telle qu'un processeur, exécute le procédé selon l'une quelconque des revendications 1 à 6.

8. Processeur muni d'un programme informatique selon la revendication 7 installé dessus.

9. Véhicule sans pilote qui comprend un capteur optique, une unité de suivi de cible, et un processeur selon la revendication 8.

$$\upsilon(0)$$

$$- \frac{s(0) - R}{T}$$

FIG. 1

$P_{approx}$  $P_{approx} - P_{samp}$

T (sec)  T (sec)

FIG. 2

FIG. 3

FIG. 4

FIG. 5

FIG. 6

FIG. 7

FIG. 8

FIG. 9

FIG. 10

FIG. 11

301 ⌇ Recording an image of an
area using a sensor
mounted on a vehicle

303 ⌇ Determining if an object is
present in the recorded
image

YES

305 ⌇ Determining the direction
and velocity of the object

307 ⌇ Determining the
probability of the object
colliding with the vehicle

FIG. 12

401 — Determining an angle to an object in a coordinate system in a recorded image

403 — Rotating the coordinate system wherein the object is aligned with the x-axis of the coordinate system

405 — Reading a velocity and direction of the object relative the vehicle from a target tracking sensor

407 — Reading an initial distance value to the object from the image data

409 — Calculating the probability of collision between the vehicle and the object by using the initial value of the distance in a stochastic process, approximating a boundary of a safety zone of the vehicle towards the object as a straight line of a predetermined length and performing the calculation using the stochastic process, the read direction and velocity to determine the probability that the object will cross the straight line

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070210953 A1